# EUROPEAN PATENT APPLICATION

(11) **EP 1 610 012 A1**
(43) Date of publication of application: **28.12.2005**
(21) Application number: 05253207.4
(22) Date of filing: 25.05.2005
(51) Int. Cl.: F16C 33/66, F01D 25/12, F01D 25/18

(54) **A bearing arrangement**

(30) Priority: 24.06.2004 GB 0414170
(71) Applicant: ROLLS-ROYCE PLC, London, SW1E 6AT (GB)
(72) Inventor: Swainson, Richard Julian, Alvaston, Derby DE24 0EG (GB)
(74) Representative: Gunn, Michael Alan

(57) **Abstract**

A bearing arrangement is provided within a bearing housing 1 in which a bearing assembly formed by inner and outer bearing races 2, 3 and bearing member 4 is subject to a drawing force to remove cooling and lubricating oil. This drawing force is created by an adjacent gear 7 through its back face which normally incorporates vanes 12. When rotating the gear 7 creates a drawing pressure scavenging oil from the bearing assembly. This drawing pressure is facilitated by a shroud 13 in order to create an effective centrifugal pump such that the oil passes up through the vanes and is then scattered by the gear's centrifugal force towards a volute 10 for collection.

## Description

The present invention relates to bearing arrangements and more particularly bearing arrangements in which a lubricated bearing is adjacent to a rotating gear.

Clearly, bearings are used in a variety of situations within machinery and engines. Typically, the bearing will support a rotary or other moveable component in order to facilitate such movement in terms of friction resistance and also smoothness of the motion. Generally the bearing will be cooled and lubricated by an appropriate oil. However, if too much oil is located within the bearing or the flow of lubricant oil is too great then there can be problems, particularly with respect to heat generation within a bearing.

In view of the nature of bearings, it is not unusual for a bearing particularly upon a rotary shaft to be located adjacent to a gear, and in particular a bevelled gear. Thus, the rotary motion is generated by the mechanical couplings created through the gear whilst the bearing facilitates such rotary motion. In such circumstances, there is uni-axial or at least adjacent rotation of the gear and bearing. As indicated, the gear will typically be of a bevel type but spur and helical gears can also be used. Particularly useful with respect to rotary shafts within engines is provision of a bearing comprising an inner race and an outer race with bearing rollers or balls held captive between these inner and outer bearing races.

Generally, lubricating oil is sprayed or projected towards the bearing where it acts between the surfaces of the bearing races and the bearing member (roller or ball) in order to create the bearing effect desired.

It will be understood in previous gear arrangements that the cooling and lubricating oil is discharged from that gear by centrifugal forces which scatter displaced oil towards a volute recess within the housing for the gear in order to avoid windage and other problems.

In a normal bearing chamber, lubricating oil from the bearing is flung out at all angles in an uncontrolled manner such that some of that oil may be re-ingested, that is to say through back splash inhibiting lubricating oil renewal and flow through the bearing and so having detrimental effects upon cooling and lubricating performance.

In order to achieve high speed bearing operation it is desirable to limit the work done on the lubricating oil to minimise heat to oil effects, which as indicated may have detrimental consequences with respect to cooling and lubrication within the bearing as well as premature degradation of the actual lubricating oil requiring earlier replacement of that lubricating oil than would otherwise be necessary.

Previously it has been known to collect the scattered lubricating oil utilising a low power vacuum (oil scavenge) pump located to draw oil from the general bearing chamber. However, such an approach results in an arrangement which is dependent upon bearing chamber sealing air pressure in comparison with the low power vacuum pump in order to achieve the lubricating oil flow and regulation required.

In accordance with the present invention there is provided a bearing arrangement comprising a bearing near a gear arranged to rotate in use adjacent the bearing, the gear including draw means to generate a draw pressure whereby an oil flow within the bearing is regulated.

Generally, the draw means comprises vanes associated with a rear surface of the gear facing the bearing. Typically, the vanes comprise upstanding portions upon the rear surface of the gear. Alternatively, the vanes comprise grooves formed in the rear surface of the gear facing the bearing.

Generally, the draw means draws oil from the bearing for distribution by a centrifugal force towards a volute in the bearing arrangement. Normally, the gear is a bevel gear or spur gear or helical gear.

Normally, the bearing and the gear rotate or move about a common axis.

Typically, the regulation of the oil flow is in terms of limiting backward oil ingestion into the bearing. Furthermore, the regulation of the oil flow includes maximising oil mass flow through the bearing.

Also, in accordance with the present invention there is provided a machine incorporating a bearing arrangement as described above.

An embodiment of the present invention will now be described by way of example and with reference to the accompanying drawings in which a part cross section of a bearing housing incorporating a bearing arrangement in accordance with the present invention is illustrated.

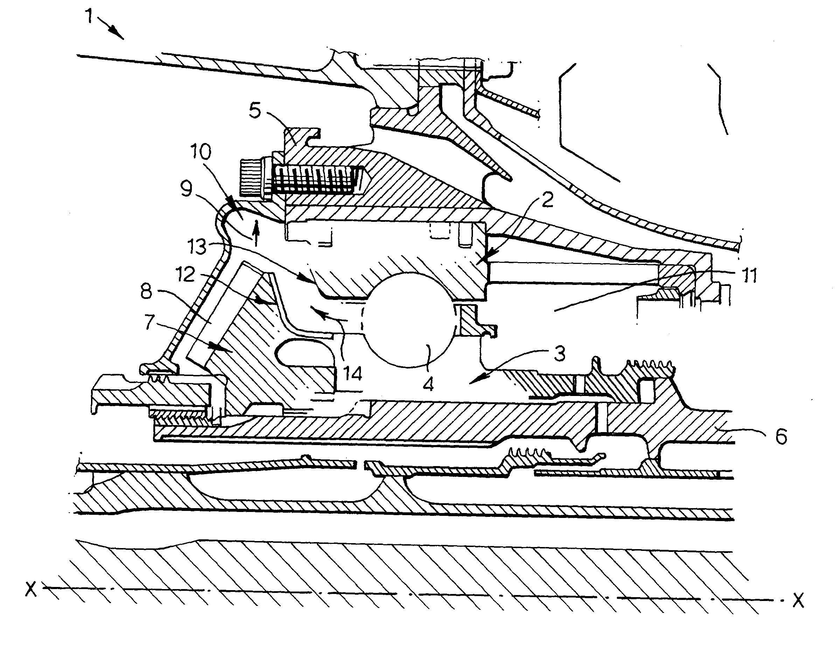

The drawing provides a part cross section of a bearing casing 1 incorporating a bearing arrangement in accordance with the present invention. The arrangement comprises a bearing formed by an outer bearing race 2 and an inner bearing race 3 between which a ball bearing 4 is captured in order to constitute the bearing. It will be noted that the outer race 2 is secured to a casing assembly 5 whilst the inner race 3 is secured to a shaft 6. The shaft 6 is also associated with a gear 7 which incorporates gear teeth 8 for mechanical interaction with another gear or gears (not shown). Alternative forms of lubricated bearing could also be part of an arrangement in accordance with the present invention.

The gear 7 is typically of a bevel type, although spur gears or helix gears could also be used. In any event, the gear 7 rotates about a shaft notionally shown as X-X in order that through centrifugal force, cooling and lubricating oil is scattered outwardly from a peripheral edge of the gear 7 in the direction of arrowhead 9 towards a volute 10 in the casing assembly 5. Such scatter and collection of oil in the volute 10 is part of cycling regime in which re-cycled cooled oil is presented to the gear 7 appropriately through an oil gallery/thrower or injector such that there is recycling and therefore proper regulation of lubricant with respective gear 7 operation.

The bearing comprising races 2, 3 and a number of bearing balls 4 or rollers similarly is presented with lubricating and cooling oil in order to achieve operational efficiency. Nevertheless, as indicated above, it is important to regulate that oil within the bearing if problems with overheating as a result of reduced oil mass flow are to be avoided. Typically, as described previously, a bearing cavity 11 would be evacuated by a vacuum pump in order to facilitate such oil flow regulation. However, such an approach requires close control of the cavity 11 pressure and provision of a separate vacuum pump. These can significantly add to cost as well as weight.

The present invention aims to minimise the amount of oil re-ingested into the bearing, so minimising bearing heat generation and improving the maximum possible oil mass flow rate through the bearing. This is achieved by essentially shrouding both the gear 7 and bearing such that through utilising their own centrifugal forces there is a scavenging effect with respect to oil within the bearing 2. It is important that the gear 7 and bearing are adjacent to each other such that a drawing effect is achieved by the rotation of the gear 7. It will be understood through the relatively localised effect between the rear face surface of the gear 7 opposing the bearing, there is less dependence upon close control of the bearing cavity 11 pressure in comparison with a vacuum pump.

For geometries of gear, whether bevel or spur, where there is close adjacent positioning relative to a bearing, it will be understood that there are generally aligned axes of rotation and similar diameters for a back or rear face surface of the gear 7 and the bearing face between the races 2, 3. In accordance with the present invention the back surface of the gear 7 is used to draw oil from the bearing and so improve scavenge or oil flow through that bearing. Normally, the draw effect of the back face of the gear 7 is improved by provision of vanes 12 which rotate with the gear 7. These vanes 7 may be formed as individual protrusions from the back face or by creating grooves in that back face to stimulate through rotational draft the desired drawing effect upon oil from the bearing.

In order to facilitate the drawing effect, the vanes 12 are cut in the back or rear surface of the gear 7. In order to further facilitate the oil draw effect created by the back face and in particular vanes 12, a shroud 13 is provided to the bearing as part of the outer race 2. This shroud 13 essentially forms a centrifugal pump between the bearing and vanes 7 such that oil is drawn in the direction of arrowhead 14 towards the vanes 7 where it then combines with the oil of the gear 7 for centrifugal spray dispersion in the direction of arrowhead 9 towards the volute 10. In such circumstances the oil within the bearing is regulated to maximise oil mass flow as described above as well as avoid overheating of the oil within the bearing. It will be understood that splash back or ingress of oil into the bearing is limited by the positive outward draw effect created by the vanes 7. In such circumstances, cooling and lubricating oil presented to the bearing achieves best operational performance.

It will be appreciated in a practical embodiment of the present invention a number of ball bearings 4 will be retained between the bearing inner race 3 and the outer race 2. Thus, oil drawn by the rear face of the gear 7 will be centrifugally distributed into the volute 10 throughout the circumference of the housing 5 and subsequently collected for filtering, cooling and normally return for cooling and lubricating effect with respect to the bearing and/or gear 7 as required.

It will be understood that the strength of the drawing pressure created by the back surface and in particular vanes 12 of the gear 7 will be dependent upon rotational speeds. In such circumstances there is an auto-adjustment between the gear 7 rotational speed and therefore the drawing effect and the presented oil heating problems associated with mass flow/ingress to the bearing supporting the rotational shaft normally upon which that gear 7 is secured. Nevertheless, it will be understood that the relationship will be specifically designed for particular operational performance under predicted conditions in terms of the expected normal rotational speed of the gear 7, spacing between that gear 7 and the bearing, and the centrifugal pump effect created by the shroud 13.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A bearing arrangement comprising a bearing (2, 3, 4) near a gear (7) arranged to rotate in use adjacent the bearing (2, 3, 4), **characterised in that** the gear (7) includes draw means to generate a draw pressure whereby an oil flow (14) within the bearing (2, 3, 4) is regulated.

2. An arrangement as claimed in claim 1 wherein the draw means comprises vanes (12) associated with a rear surface of the gear (7) facing the bearing (2, 3, 4).

3. An arrangement as claimed in claim 2 wherein the vanes (12) comprise upstanding portions upon the rear surface of the gear (7).

4. An arrangement as claimed in claim 2 wherein the vanes (12) comprise grooves formed in the rear surface of the gear (7) facing the bearing (2, 3, 4).

5. An arrangement as claimed in any preceding claim wherein the draw means draws oil from the bearing (2, 3, 4) for distribution by a centrifugal force towards a volute (10) in the bearing arrangement.

6. An arrangement as claimed in any preceding claim wherein the gear (7) is a bevel gear or spur gear or helical gear.

7. An arrangement as claimed in any preceding claim wherein the bearing (2, 3, 4) and the gear (7) rotate or move about a common axis (X-X).

8. An arrangement as claimed in any preceding claim wherein the regulation of the oil flow is in terms of limiting backward oil ingestion into the bearing (2, 3, 4).

9. An arrangement as claimed in any preceding claim wherein the regulation of the oil flow includes maximising oil mass flow through the bearing (2, 3, 4).

10. A machine such as an engine incorporating a bearing arrangement as claimed in any preceding claim.
